# EUROPEAN PATENT APPLICATION

(11) **EP 3 000 667 A2**
(43) Date of publication of application: **30.03.2016**
(21) Application number: 15152769.4
(22) Date of filing: 28.01.2015
(51) Int. Cl.: B60T 7/06, G05G 1/42

(54) **Motor vehicle pedal and motor vehicle having the same**

(30) Priority: 19.08.2014 CN 201410410358
(71) Applicant: Beiqi Foton Motor Co., Ltd., Beijing 102206 (CN)
(72) Inventor: Jin, Dawei, Changping District (CN); Yang, Yaning, Changping District (CN)
(74) Representative: Grünecker Patent- und Rechtsanwälte PartG mbB

(57) **Abstract**

The present invention provides a motor vehicle pedal and a motor vehicle having the same, where the motor vehicle pedal includes a fixed bearing and a pedal arm connected to the fixed bearing, and the pedal arm includes: a first pedal arm; an adjusting assembly, disposed on the first pedal arm, where the adjusting assembly includes an assembly body that is disposed along an extending direction of the first pedal arm and is adjustable in position; and a second pedal arm, disposed on the assembly body of the adjusting assembly and moving along with the assembly body. By using the motor vehicle pedal of the present invention, an adjusting assembly is disposed on a first pedal arm, and a second pedal arm is fixed on an assembly body of the adjusting assembly, which can adjust a relative position between the first pedal arm and the second pedal arm by changing a relative position between the assembly body and the first pedal arm, so as to achieve an objective of changing a length of an entire pedal arm, so that the length of the pedal arm can be adjusted according to habits of different users, thereby achieving an objective of improving the comfort of the motor vehicle pedal.

## Description

### BACKGROUND

### Technical Field

The present invention relates to the field of motor vehicles, and in particular, to a motor vehicle pedal and a motor vehicle having the same.

### Related Art

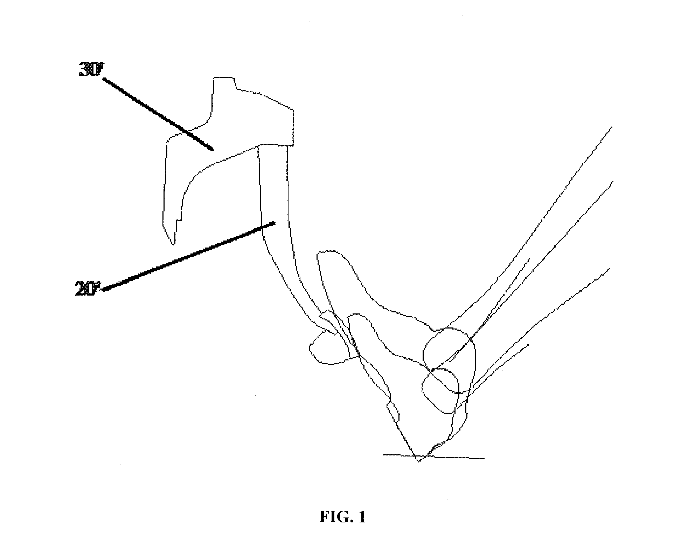

As shown in FIG. 1, a motor vehicle pedal in the prior art includes a pedal arm 20' and a fixed bearing 30' used for connecting to the pedal arm 20'. In the prior art, a position of the pedal arm 20' relative to the fixed bearing 30' is relatively unchanged. In addition, during design, a height of the motor vehicle pedal is generally designed according to that of 95% of male bodies. For females, due to their smaller soles, when they tread on motor vehicle pedals of the same height, the comfort is poorer.

### SUMMARY

The present invention aims to provide a motor vehicle pedal and a motor vehicle having the same, so as to achieve an objective of improving the comfort of the motor vehicle pedal.

In order to achieve the foregoing objective, the present invention provides a motor vehicle pedal, including a fixed bearing and a pedal arm connected to the fixed bearing, where the pedal arm includes: a first pedal arm; an adjusting assembly, disposed on the first pedal arm, where the adjusting assembly includes an assembly body that is disposed along an extending direction of the first pedal arm and is adjustable in position; and a second pedal arm, disposed on the assembly body of the adjusting assembly and moving along with the assembly body.

Further, the adjusting assembly further includes a drive assembly for driving the assembly body to move.

Further, the drive assembly includes a connecting assembly and a power assembly, where the connecting assembly is disposed on the first pedal arm, the assembly body is cooperatively connected to the connecting assembly, and the power assembly is in drive cooperation with the connecting assembly, so as to drive the connecting assembly to drive the assembly body to move.

Further, the connecting assembly includes a worm disposed on the first pedal arm, the worm is disposed along the extending direction of the first pedal arm, the assembly body includes a sliding block, a worm-gear structure cooperatively connected to the worm is disposed on the sliding block, and the second pedal arm is fixed on the sliding block.

Further, the connecting assembly includes a conveyor belt disposed on the first pedal arm, the conveyor belt is disposed along the extending direction of the first pedal arm, the assembly body includes a sliding block fixed on the conveyor belt, and the second pedal arm is fixed on the sliding block.

Further, the motor vehicle pedal further includes a guide assembly, the guide assembly is disposed on the first pedal arm, the adjusting assembly includes the assembly body, and the assembly body is slidably disposed on the guide assembly.

Further, the guide assembly includes a sliding rail disposed on the first pedal arm and along the extending direction of the first pedal arm, and the assembly body is provided with a sliding slot or a sliding hole for cooperating with the sliding rail.

Further, the present invention further provides a vehicle, including the foregoing motor vehicle pedal.

By using the motor vehicle pedal of the present invention, an adjusting assembly is disposed on a first pedal arm, and a second pedal arm is fixed on an assembly body of the adjusting assembly, which can adjust a relative position between the first pedal arm and the second pedal arm by changing a relative position between the assembly body and the first pedal arm, so as to achieve an objective of changing a length of an entire pedal arm, so that the length of the pedal arm can be adjusted according to habits of different users, thereby achieving an objective of improving the comfort of the motor vehicle pedal.

### BRIEF DESCRIPTION OF THE DRAWINGS

The accompanying drawings in this specification which constitute a part of this application are intended to provide further understanding of the present invention. Exemplary embodiments of the present invention and description thereof are intended to explain the present invention, without constituting an improper limit to the present invention. In the accompanying drawings:
FIG. 1 is a schematic structural diagram of a motor vehicle pedal in the prior art;
FIG. 2 is an exploded schematic structural diagram of a motor vehicle pedal according to a first embodiment of the present invention;
FIG. 3 is a schematic structural diagram showing that an adjusting assembly of a motor vehicle pedal is mounted to a first pedal arm according to a first embodiment of the present invention;
FIG. 4 is a schematic structural diagram of a second pedal arm of a motor vehicle pedal according to a first embodiment of the present invention;
FIG. 5 is an exploded schematic structural diagram of a motor vehicle pedal according to a second embodiment of the present invention; and
FIG. 6 is a schematic structural diagram showing that an adjusting assembly of a motor vehicle pedal is mounted to a first pedal arm according to a second embodiment of the present invention.

Reference numerals in the drawings: 10. first pedal arm; 11. groove structure; 20. second pedal arm; 21. second pedal arm body; 22. accommodating groove; 23. mating hole; 30. fixed bearing; 40. drive assembly; 41. connecting assembly; 42. power assembly; 50. assembly body; and 60. guide assembly.

### DETAILED DESCRIPTION

It should be noted that embodiments in this application and features in the embodiments can be combined without any conflict. The present invention is described in detail with reference to accompanying drawings and in combination with the embodiments in the following.

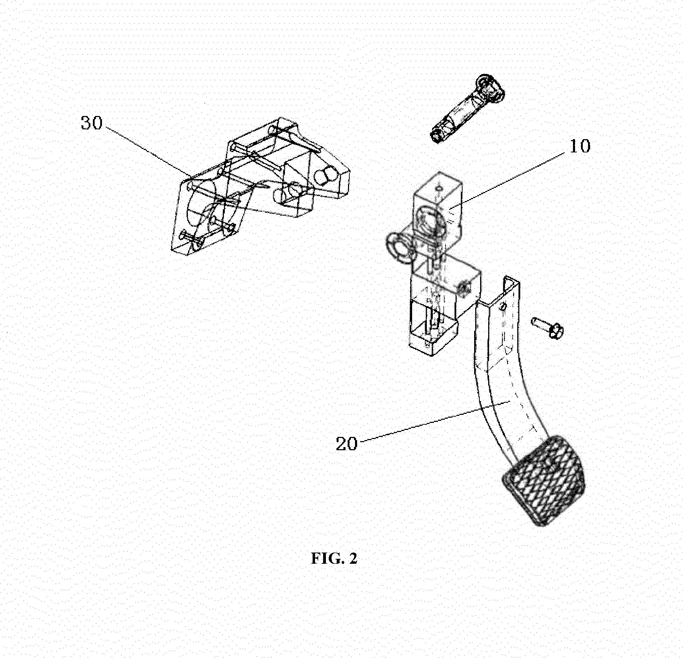

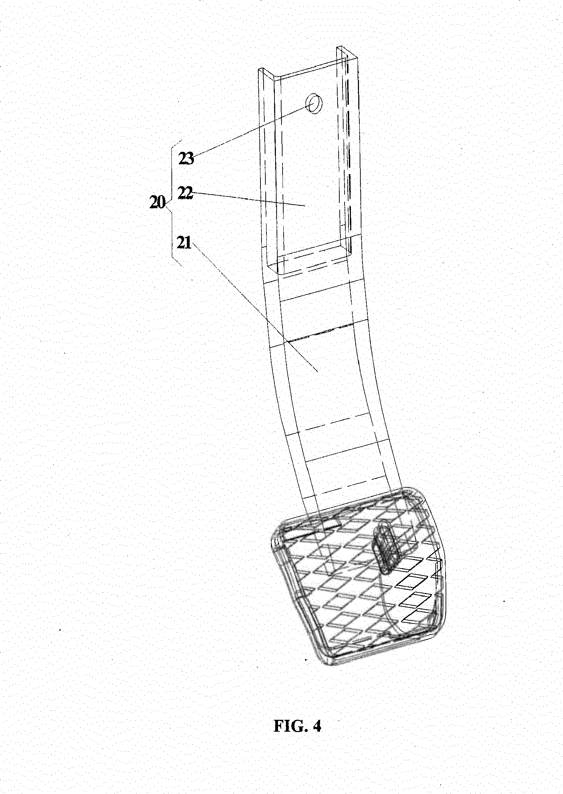

As shown in FIG. 2 to FIG. 4, a first embodiment of the present invention provides a motor vehicle pedal, including a fixed bearing 30 and a pedal arm, where the pedal arm includes a first pedal arm 10, a second pedal arm 20, a drive assembly 40, and an adjusting assembly. The first pedal arm 10 is connected to the fixed bearing 30. The adjusting assembly includes an assembly body 50 that is disposed on the first pedal arm 10 and along an extending direction of the first pedal arm 10 and is adjustable in position. The second pedal arm 20 is disposed on the assembly body 50 of the adjusting assembly and moves along with the assembly body 50. The drive assembly 40 is in drive connection with the adjusting assembly, for driving the adjusting assembly to drive the second pedal arm 20 to move.

The adjusting assembly is disposed on the first pedal arm 10, and the second pedal arm 20 is fixed on the assembly body 50 of the adjusting assembly, which can adjust a relative position between the first pedal arm 10 and the second pedal arm 20 by changing a relative position between the assembly body 50 of the adjusting assembly and the first pedal arm 10, so as to achieve an objective of changing a length of the entire pedal arm, so that the length of the pedal arm can be adjusted according to habits of different users, thereby achieving an objective of improving the comfort of the motor vehicle pedal.

Preferably, the foregoing drive assembly 40 includes a connecting assembly 41 and a power assembly 42. A groove structure 11 is disposed on the foregoing first pedal arm 10, the foregoing connecting assembly 41 is arranged inside the foregoing groove structure 11 along the extending direction of the first pedal arm 10, and the assembly body 50 is disposed in cooperation with the connecting assembly 41, and is driven by the connecting assembly 41 to make reciprocating movement along with the connecting assembly 41 along the extending direction (the shown vertical direction) of the first pedal arm 10. The power assembly 42 and the connecting assembly 41 are in drive connection, so as to drive the connecting assembly 41 to drive the assembly body 50 to ascend or descend.

Specifically, the connecting assembly 41 in the first embodiment of the present invention is a worm disposed on the first pedal arm 10 and parallel with the extending direction of the first pedal arm 10, and two ends of the worm are both rotatably disposed on the first pedal arm 10. The foregoing assembly body 50 is a sliding block sleeved over the worm and cooperatively connected to the worm. A worm-gear structure cooperating with the worm is disposed at a position where the sliding block and worm are connected. When the worm rotates, the foregoing sliding block is capable of ascending or descending along an extending direction of the worm by using the worm-gear structure, so as to drive the second pedal arm 20 to move and implement an adjustment operation.

Preferably, the sliding block and the worm are designed into structures having a self-locking state, that is, when the height of the pedal arm is adjusted, the sliding block can be driven to ascend or descend only by the rotation of the worm, and instead, the sliding block is incapable of driving the worm to rotate. In such design, after the second pedal arm 20 is adjusted to a set position, the relative position between the second pedal arm 20 and the first pedal arm 10 can be locked, thereby ensuring the safety of the practical pedal arm. Further, the worm and the sliding block may be made of a solid self-lubricating material, which is free of maintenance and free of lubrication between the worm and the sliding block, so that maintenance costs and maintenance time can be reduced.

It should be noted that the worm in this embodiment of the present invention may also be set to a screw structure, and the foregoing sliding block is correspondingly provided with a threaded hole cooperating with the screw structure.

The power assembly 42 in this embodiment may be a stepper motor in drive connection with the worm, and the stepper motor is capable of rotating forward and backward, thereby implementing that the second pedal arm 20 can ascend or descend along an up-and-down direction shown in FIG. 2, and achieving the objective of adjusting the length of the pedal arm.

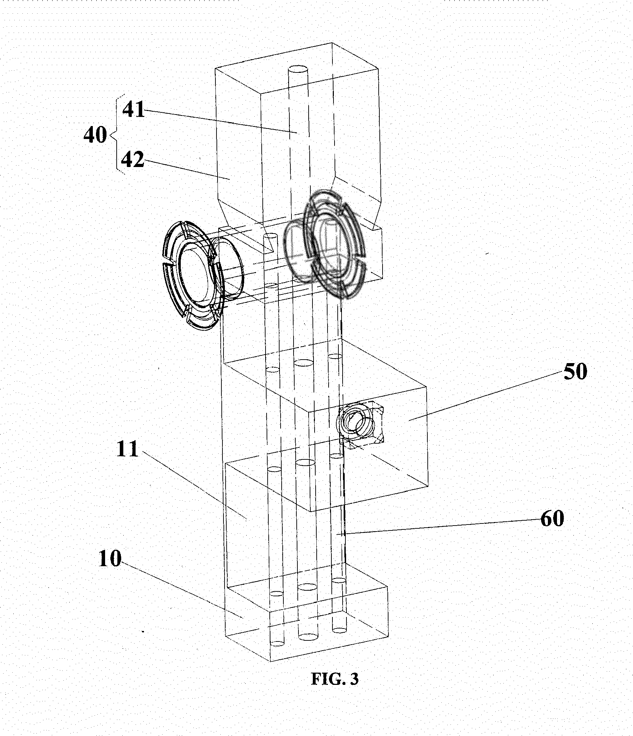

The first pedal arm 10 is provided with an accommodating space, and the foregoing stepper motor is disposed in the accommodating space. As shown in FIG. 2 and FIG. 3, the foregoing accommodating space is disposed on a top portion of the first pedal arm 10, and the worm extends into the accommodating space from a bottom end of the first pedal arm 10 and is connected to the stepper motor.

Further, a through hole penetrating the body of the first pedal arm 10 is further provided around a top end of the first pedal arm 10, and the fixed bearing 30 is provided with a connecting hole cooperating with the through hole. A fixed pin passes through the connecting hole and the through hole in sequence and mounts the first pedal arm 10 on the fixed bearing 30.

It should be noted that, in order that the sliding block is capable of sliding according to a set track, a guide assembly 60 may further be disposed inside the groove structure 11 of the first pedal arm 10. As shown in FIG. 3, the guide assembly 60 in the first embodiment of the present invention may be two guide rails symmetrically arranged on two sides of the worm. The foregoing two guide rails and the foregoing worm are disposed in parallel with each other. The sliding block is sleeved on the worm and the guide rails and is driven by the worm to slide along the guide rails. In addition to playing a guiding role, the foregoing guide rails may also support the sliding block. When a user treads on the second pedal arm 20, a treading force can be transmitted by using the guide rails.

Further, the second pedal arm 20 in the first embodiment of the present invention includes a second pedal arm body 21 and an accommodating groove 22 disposed on the second pedal arm body 21, and the foregoing sliding block has a mounting surface, presses against an inner surface of the accommodating groove 22 and is disposed inside the accommodating groove 22. The foregoing mounting surface is provided with a mounting hole, the foregoing accommodating groove 22 is provided with a mating hole 23 cooperating with the mounting hole, and a fixing bolt penetrates the mating hole and the mounting hole in sequence, and fixes the second pedal arm 20 on the sliding block.

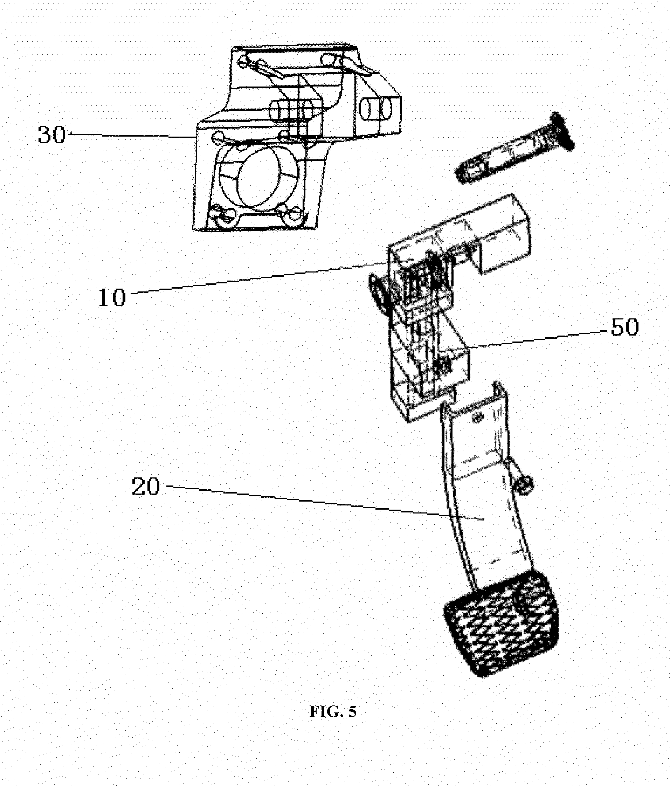

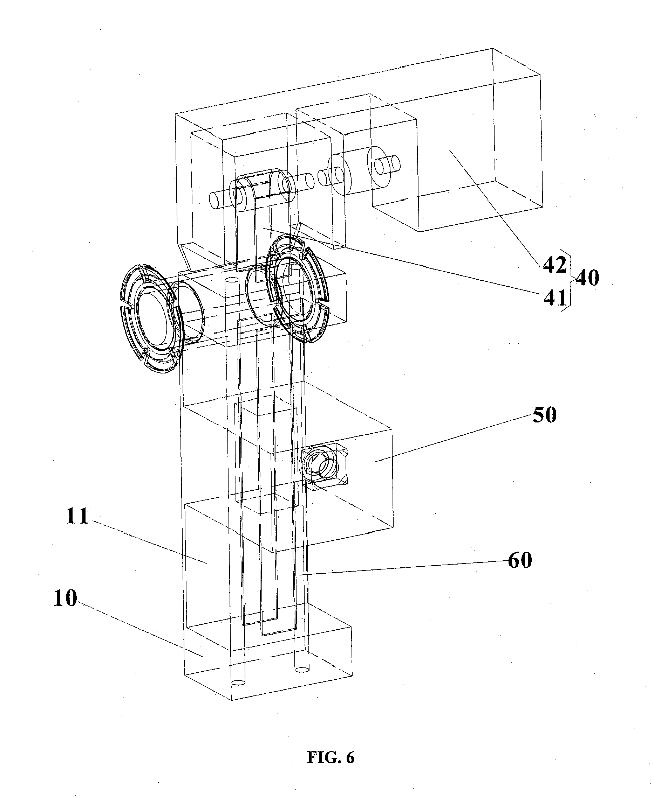

FIG. 5 and FIG. 6 show a structure of a second embodiment of the present invention. In this embodiment, a connecting assembly 41 is a conveyor belt disposed on a first pedal arm 10. The conveyor belt is supported by rotation shafts disposed at both upper and lower end portions of the first pedal arm 10. The foregoing stepper motor is connected to one of the rotation shafts, and sets the foregoing conveyor belt and the rotation shaft to a synchronous structure. That is, a rotation distance of the stepper motor is the same as a stroke of the conveyor belt driven by the stepper motor. The foregoing sliding block is fixed on the conveyor belt and moves along with the conveyor belt, so as to drive the second pedal arm 20 to move.

Preferably, the conveyor belt is incapable of providing a support force for the sliding block and the pedal arm fixed on the sliding block, and therefore, in this embodiment, guide rails disposed in parallel with the conveyor belt are disposed at two sides of the conveyor belt. The guide rails not only can guide the sliding block, but also can provide a stable support force for the sliding block, so as to ensure the overall strength of the pedal arm.

It should be noted that, the foregoing conveyor belt implements a self-locking operation by using a self-locking performance of the motor itself, and both a rolling wheel and a rolling bearing of the foregoing conveyor belt may be made of a solid self-lubricating material, so as to achieve an effect of being free of lubrication and free of maintenance.

Further, in the second embodiment, an accommodating space for mounting the foregoing stepper motor extends out from a side of a body of the first pedal arm 10, the foregoing stepper motor is disposed in the accommodating space, and a rotation shaft of the stepper motor extends out from the accommodating space, and is connected to a support rotation shaft disposed on the first pedal arm 10 and used for supporting the conveyor belt.

Specifically, in this embodiment, the accommodating space is connected to the body of the first pedal arm 10 and is provided with a mounting cavity, and the rotation shaft of the stepper motor and the support rotation shaft of the conveyor belt are connected in the mounting cavity by using a shaft coupling.

It should be noted that, except the foregoing features, other features of the second embodiment of the present invention are the same as those in the first embodiment.

It can be seen from the above description that, the forgoing embodiments of the present invention achieve the following technical effects: an adjusting assembly is disposed on a first pedal arm, and a second pedal arm is fixed on the adjusting assembly, which can adjust a relative position between the first pedal arm and the second pedal arm by changing a relative position between the adjusting assembly and the first pedal arm, so as to achieve an objective of changing a height of an entire pedal arm, so that the height of the pedal arm can be adjusted according to habits of different users, thereby achieving an objective of improving the comfort of the motor vehicle pedal.

The foregoing descriptions are merely preferable embodiments of the present invention, but are not intended to limit the present invention. A person skilled in the art may make various modifications and changes to the present invention. Any modification, equivalent replacement, and improvement made without departing from the spirit and principle of the present invention shall fall within the protection scope of the present invention.

## Claims

1. A motor vehicle pedal, comprising a fixed bearing (30) and a pedal arm connected to the fixed bearing (30), wherein the pedal arm comprises:
a first pedal arm (10);
an adjusting assembly, disposed on the first pedal arm (10), wherein the adjusting assembly comprises an assembly body (50) that is disposed along an extending direction of the first pedal arm (10) and is adjustable in position; and
a second pedal arm (20), disposed on the assembly body (50) of the adjusting assembly and moving along with the assembly body (50).

2. The motor vehicle pedal according to claim 1, wherein the adjusting assembly further comprises a drive assembly (40) for driving the assembly body (50) to move.

3. The motor vehicle pedal according to claim 2, wherein the drive assembly (40) comprises a connecting assembly (41) and a power assembly (42), the connecting assembly (41) is disposed on the first pedal arm (10), the assembly body (50) is cooperatively connected to the connecting assembly (41), and the power assembly (42) is in drive cooperation with the connecting assembly (41), so as to drive the connecting assembly (41) to drive the assembly body (50) to move.

4. The motor vehicle pedal according to claim 3, wherein the connecting assembly (41) comprises a worm disposed on the first pedal arm (10), the worm is disposed along the extending direction of the first pedal arm (10), the assembly body (50) comprises a sliding block, a worm-gear structure cooperatively connected to the worm is disposed on the sliding block, and the second pedal arm (20) is fixed on the sliding block.

5. The motor vehicle pedal according to claim 3, wherein the connecting assembly (41) comprises a conveyor belt disposed on the first pedal arm (10), the conveyor belt is disposed along the extending direction of the first pedal arm (10), the assembly body (50) comprises a sliding block fixed on the conveyor belt, and the second pedal arm (20) is fixed on the sliding block.

6. The motor vehicle pedal according to claim 1, wherein the motor vehicle pedal further comprises a guide assembly (60), the guide assembly (60) is disposed on the first pedal arm (10), the adjusting assembly comprises the assembly body (50), and the assembly body (50) is slidably disposed on the guide assembly (60).

7. The motor vehicle pedal according to claim 6, wherein the guide assembly (60) comprises a sliding rail disposed on the first pedal arm (10) and along the extending direction of the first pedal arm (10), and the assembly body (50) is provided with a sliding slot or a sliding hole for cooperating with the sliding rail.

8. A vehicle, comprising a motor vehicle pedal, wherein the motor vehicle pedal is the motor vehicle pedal according to any one of claims 1 to 7.
